# EUROPÄISCHE PATENTSCHRIFT

(11) **EP 1 409 862 B1**
(45) Veröffentlichungstag und Bekanntmachung des Hinweises auf die Patenterteilung: **01.12.2004**
(21) Anmeldenummer: 02759854.9
(22) Anmeldetag: 16.07.2002
(51) Int. Cl.: F02C 3/13, F02C 3/107, F02C 6/20, F02C 7/00, F02C 7/36

(54) **GASTURBINE**
GAS TURBINE
TURBINE A GAZ

(30) Priorität: 24.07.2001 AT 11502001
(43) Veröffentlichungstag der Anmeldung: 21.04.2004
(73) Patentinhaber: Jakadofsky, Peter, 1030 Wien (AT)
(72) Erfinder: Jakadofsky, Peter, 1030 Wien (AT)
(74) Vertreter: Pawloy, Heinrich, Dr.
(86) Internationale Anmeldenummer: PCT/AT2002/000209
(87) Internationale Veröffentlichungsnummer: WO 2003/010425

(56) Entgegenhaltungen:
- EP-A- 0 539 636
- FR-A- 2 710 108
- US-A- 3 965 699
- US-A- 4 157 011

## Beschreibung

Die Erfindung betrifft eine Gasturbine, insbesondere für Modellflugzeuge, Modellhubschrauber und andere kleine Antriebe, mit einer eine ringförmige Brennkammer durchsetzenden, mittels zwei Hauptlagern drehbar gelagerten Antriebswelle, mit der ein Verdichterrad und ein Turbinenrad drehfest verbunden sind, und einer von der Antriebswelle angetriebenen Abtriebswelle. Derartige Gasturbinen werden neben dem Antrieb von Modellflugzeugen, zu dessen Zweck sie üblicherweise abtriebsseitig mit einem Propellerrad versehen sind, und dem Antrieb von Modellhubschraubern, zu dessen Zweck sie üblicherweise abtriebsseitig mit einer Fliehkraftkupplung mit Zahnrad oder Zahnriemenscheibe versehen sind, auch für andere kleine Antriebe, wie Generatoren und Wasserpumpen sowie für militärische Applikationen eingesetzt, für welche sie aufgrund des lärmarmen und vor allem platzsparenden Antriebs besonders geeignet sind.

Üblicherweise ist bei derartigen Gasturbinen zur Untersetzung der Drehzahl der Antriebswelle ein Planetengetriebe an der Vorderseite, d.h. der Verdichterseite, der Gasturbine angeordnet, durch welches eine Verbindung mit einer Abtriebswelle hergestellt werden kann. Derartige Gasturbinen sind jedoch aufwendig und weisen relativ große Abmessungen auf. Zudem ergibt sich aufgrund der endseitigen Drehmomentabnahme an der Antriebswelle eine zusätzliche Erregungskraft für die Antriebswelle, welche zu einem instabilen Schwingungsverhalten der Antriebswelle führen kann. Aus diesem Grund ist häufig das Vorsehen eines zusätzlichen Stützlagers erforderlich.

Als nächstkommender Stand der Technik können bekannte Gasturbinen gemäß dem eingangs genannten Oberbegriff genannt werden, wobei vor dem Verdichterrad über ein Planetengetriebe Drehmoment abgenommen wird, derartige Gasturbinen sind beispielsweise das . Modell Artouste der Firma Turbomeca, Frankreich. Des weiteren können Gasturbine wie z.B im US 3 965 699 offenbart genannt werden.

Die US 2 955 657 A sowie die US 2 711 295 A beschreiben jeweils Gasturbinen mit zylindrischen Brennkammern, welche radial um eine zentrale Antriebswelle angeordnet sind. Von der Antriebswelle wird das Drehmoment mittels Kegelräder abgenommen, umgelenkt und zum Antrieb von ein bzw. zwei Rotoren verwendet.

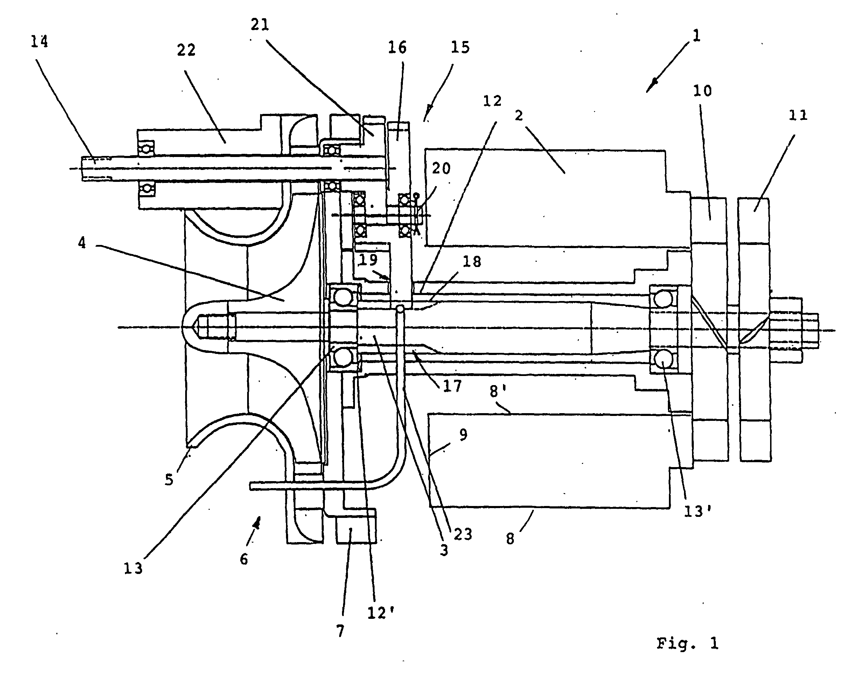

Die DE 11 23 522 wiederum betrifft ein Propeller-Turbinen-Luftstrahltriebwerk, wobei gemäß Fig. 1 eine Zweiwellenturbine mit an die Antriebswelle anschließender Brennkammer gezeigt wird, worin auf dem Freiläufer Zahnräder zur Abnahme eines Drehmoments angeordnet sind.

Ziel der Erfindung ist es nun, eine Gasturbine der eingangs angeführten Art zu schaffen, bei welcher auf möglichst einfache Weise die Drehmomentübertragung von der Antriebswelle zur Abtriebswelle erfolgt. Zudem soll die Antriebswelle ein stabiles Schwingungsverhalten aufweisen, wodurch das Vorsehen von zusätzlichen Lagerstellen nicht erforderlich ist. Des Weiteren. soll die Gasturbine im Vergleich zu bekannten Vorrichtungen geringere Abmessungen und ein geringeres Gesamtgewicht aufweisen.

Die erfindungsgemäße Gasturbine der eingangs angeführten Art ist dadurch gekennzeichnet, dass eine aus Stirnzahnrädern bestehende Vorrichtung zur Drehmomentübertragung von der Antriebswelle auf die Abtriebswelle zwischen den beiden Hauptlagern vorgesehen ist. Durch die Abnahme des Drehmoments und dessen Übertragung auf die Abtriebswelle zwischen den beiden Hauptlagern ergibt sich eine Antriebseinheit, die in Achsrichtung der Antriebswelle eine relativ geringe Erstreckung aufweist und zudem wird das Schwingungsverhalten der Antriebswelle nur geringfügig verändert. Somit kann das Vorsehen von zusätzlichen Stützlagern entfallen, wodurch sich wiederum eine konstruktiv einfache und kostengünstige Herstellung ergibt.

Insbesondere werden die Erregungen hinsichtlich Biegeschwingungen der Antriebswelle gering gehalten, wenn die Vorrichtung zur Drehmomentübertagung benachbart eines der beiden Hauptlager vorgesehen ist. Aus konstruktiven Gründen, insbesondere zur Drehmomentübertragung auf eine Abtriebswelle mit einem Propellerrad, ist es von Vorteil, wenn die Vorrichtung zur Drehmomentübertagung benachbart dem vorderen Hauptlager vorgesehen ist. Hierbei ist es auch vorteilhaft, wenn die Vorrichtung zur Drehmomentübertagung in einem Spalt zwischen einem vorderen Leitsystem und der Brennkammer vorgesehen ist. Somit kann der aus konstruktiven Gründen erforderliche tote Raum zwischen dem vorderen Leitsystem und der Brennkammer sinnvoll genützt werden, wobei der Spalt zwischen vorderem Leitsystem und Brennkammer für einen zuverlässigen Lufteintritt in die Brennkammer erforderlich ist, da somit sowohl über die vordere Stirnseite als auch die Innenseite Luft eintreten kann, wodurch wiederum eine effiziente Verbrennung erlangt wird.

Wenn als Vorrichtung zur Drehmomentübertragung ein Zahnradgetriebe vorgesehen ist, ist eine konstruktiv einfache Übertragung der Drehzahl von der Antriebswelle auf die Abtriebswelle möglich und zudem kann durch die beliebige Wahl der Stufen des Zahnradgetriebes die gewünschte Untersetzung der Drehzahl der Abtriebswelle zur Drehzahl der Antriebswelle erlangt werden. Bei den meisten Anwendungen der erfindungsgemäßen Gasturbine ist es besonders günstig, wenn ein zweistufiges Zahnradgetriebe vorgesehen ist, da somit einerseits eine geringe Teileanzahl und somit eine einfache Konstruktion vorliegt, andererseits jedoch mittels des zweistufigen Getriebes die gewünschte Untersetzung auf effiziente Weise erlangt werden kann. Zudem ergibt sich bei einem zweistufigen Getriebe ein Abstand der Abtriebswelle von der Antriebswelle, welcher eine einfache Abnahme der Abtriebswellenleistung beispielsweise mittels eines Propellerrades ermöglicht.

Hinsichtlich einer besonders einfachen effizienten Montage der erfindungsgemäßen Gasturbine ist es von Vorteil, wenn die Antriebswelle zumindest abschnittsweise eine eingefräste Verzahnung aufweist, da somit die Antriebswelle samt hinterem Hauptlager, einem hinteren Leitsystem und dem Turbinenrad in die Brennkammer bzw. einen darin vorgesehenen Wellentunnel eingesetzt werden kann. Hinsichtlich einer einfachen Montage der Antriebswelle ist es ebenfalls günstig, wenn die Verzahnung an dem dem vorderen Leitsystem zugewandten Endabschnitt der Antriebswelle vorgesehen ist, da somit die Antriebswelle bei bereits eingebautem Zahnradgetriebe von hinten eingesetzt werden kann.

Hinsichtlich einer zuverlässigen Lagerung der Antriebswelle und einer einfachen Abnahme der Wellenleistung ist es günstig, wenn ein Zahnrad des Zahnradgetriebes über eine Ausnehmung in einem die Antriebswelle umgebenden mantelförmigen Wellentunnel mit der Verzahnung der Antriebswelle in Verbindung steht.

Um eine für die Abtriebswelle zweckmäßige Drehzahl zu erhalten, ist es von Vorteil, wenn eine Untersetzung der Drehzahl der Antriebswelle zur Drehzahl der Abtriebswelle von 6-10 : 1, vorzugsweise von 8 : 1 vorgesehen ist, wobei die Antriebswelle mit bis zu ca. 120 000 U/min umlaufen kann.

Um ungehindert das Drehmoment von der Abtriebswelle weiter übertragen zu können, ist es vorteilhaft, wenn die Abtriebswelle nach vorne über das Verdichterrad hinausragt. Bei Verwendung der Gasturbine zum Antrieb von Modellflugzeugen ist es insbesondere günstig, wenn ein Propellerrad mit der Abtriebswelle drehfest verbunden ist. Beim Antrieb von Modellhubschraubern ist es hingegen von Vorteil, wenn die Abtriebswelle mit einer Fliehkraftkupplung mit einem Zahnrad oder einer Zahnriemenscheibe verbunden ist.

Wenn eine Schmierleitung im Bereich der Verzahnung der Antriebswelle endet, kann über die Schmierleitung zuverlässig Schmiermittel in den Bereich der Verzahnung zwischen der Antriebswelle und dem ersten Zahnrad des zur Drehmomentübertragung vorgesehenen Zahnradgetriebes erfolgen.

Insbesondere ist es hierbei von Vorteil, wenn zur Schmierung ein Kraftstoff/Öl-Gemisch vorgesehen ist. Sofern die Drehmomentübertragung in der Nähe des vorderen Hauptlagers erfolgt, wird vorteilhafterweise der bei der Schmierung entstehende Sprühnebel durch die Druckdifferenz zwischen der Verdichterstufe und der Turbinenstufe in Richtung des hinteren Hauptlagers im Wellentunnel mitgenommen, wodurch sich zusätzlich der vorteilhafte Effekt der Lagerkühlung ergibt.

Hinsichtlich der Schwingungseigenschaften der Antriebswelle haben Tests ergeben, dass es besonders vorteilhaft ist, wenn die Antriebswelle einen Außendurchmesser von 13 bis 15 mm aufweist, wobei bevorzugt eine Stahlwelle eingesetzt wird. Die bei einer derartigen Antriebswelle eingesetzten Lager weisen in der Regel einen Durchmesser von maximal ca. 22 mm auf.

Die Erfindung wird nachstehend anhand von einem in der Zeichnung dargestellten bevorzugten Ausführungsbeispiel, auf das sie jedoch nicht beschränkt sein soll, noch weiter erläutert.

Im Einzelnen zeigt die Zeichnung einen Längsschnitt der Gasturbine.

In Fig.1 ist eine Gasturbine 1 mit einer ringförmigen Brennkammer 2 ersichtlich, welche von einer Antriebswelle 3 durchsetzt wird. Einlaufseitig ist ein Verdichterrad 4 vorgesehen, welches zusammen mit der Verdichterabdeckung 5 die Verdichterstufe 6 bildet. Die in der Verdichterstufe 6 verdichtete Luft wird danach über ein vorderes Leitsystem 7 in Richtung der Brennkammer 2 geleitet, wobei der Lufteintritt sowohl über Öffnungen in der Mantelfläche 8 der Brennkammer als auch der Stirnseite 9 und der Innenseite 8' erfolgt.

Nach dem Austritt aus der Brennkammer 2 wird das Brenngas über ein hinteres Leitsystem 10 dem Turbinenrad 11 zugeführt, das mit der Antriebswelle 3 drehfest verbunden ist. Das Turbinenrad ist vorzugsweise aus einem Stück spanabhebend gefertigt, wie dies im österreichischen Gebrauchmuster AT 2429 U geoffenbart ist.

Die Antriebswelle 3 ist in einem Wellentunnel 12 mit Hilfe von einem vorderen Spindelkugellager 13 und einem hinteren Spindelkugellager 13' drehbar gelagert, wobei das vordere Spindelkugellager 13 mit einer Wellenfeder 12' zur Erhöhung der Lagerspannung im Wellentunnel 12 aufgenommen ist.

Zur Übertragung der Wellenleistung der Antriebswelle 3 auf eine Abtriebswelle 14 ist ein Zahnradgetriebe 15 vorgesehen. Zum Eingriff eines Zwischenzahnrads 16 an der Antriebswelle 3 weist die Antriebswelle 3 einen Abschnitt 17 auf, in dem eine Verzahnung 18 eingefräst ist. Bei den üblichen Verwendungen einer derartigen Gasturbine, beispielsweise als Antrieb für Modellflugzeuge bzw. für kleine stationäre Antriebe, wie Generatoren, Wasserpumpen oder auch militärische Applikationen, weist die Antriebswelle eine Drehzahl von bis zu 120 000 U/min auf, und in der zweistufigen Untersetzung über die Verzahnung 17 der Antriebswelle 3, das Zwischenrad 16 und dem Abtriebszahnrad 21 erfolgt eine Drehzahluntersetzung von ca. 6-10 : 1.

Aufgrund der in die Antriebswelle 3 eingefrästen Verzahnung 18 kann bei der Montage der Gasturbine 1 die Antriebswelle 3 samt dem hinteren Spindelkugellager 13', dem hinteren Leitsystem 10 und dem Turbinenrad 11 in den Wellentunnel 12 eingesetzt werden. Übliche Abmaße sind hierbei ca. 13 bis 15 mm Wellendurchmesser bzw. maximal 22 mm Lagerdurchmesser.

Zum Eingriff des Zahnrads 16 in die Verzahnung 18 der Antriebswelle 3 weist der Wellentunnel 12 eine Ausnehmung 19 auf. Das Zwischenzahnrad 16, das über eine Welle 20 drehbar gelagert ist, weist zur Untersetzung der Drehzahl der Antriebswelle 3 eine Durchmesserabstufung auf, wobei ein abtriebseitiges Zahnrad 21, das drehfest mit der Abtriebswelle 14 verbunden ist, mit der Verzahnung geringeren Durchmessers in Eingriff steht.

Die Abtriebswelle 14 ist in einem Lagerbock 22 parallel zur Antriebswelle 3 und seitlich beabstandet der Antriebswelle 3 angeordnet, so dass zur Verwendung der Gasturbine 1 für einen Turbopropeller-Antrieb ein Propellerrad (nicht gezeigt) am vorderen Ende der nach vorne über die Verdichterstufe 6 hinausragenden Abtriebswelle 14 angebracht werden kann.

Zur Schmierung des Zahnradgetriebes 15 ist im Bereich des Eingriffs des Zahnrads 16 in der Verzahnung 18 der Antriebswelle 3 eine Schmierleitung 23 vorgesehen, über welche ein Kerosin/Öl-Gemisch in den Bereich der kämmenden Verbindung eingebracht wird. Durch die Druckdifferenz zwischen der Verdichterstufe 6 und dem Turbinenrad 11 wird das durch die Zahnräder 16 bzw. die Verzahnung 17 zerstäubte Kerosin/Öl-Gemisch in Richtung des hinteren Spindelkugellagers 13' gesaugt, wodurch sich vorteilhafterweise eine Kühlung des Spindellagers ergibt.

Durch den kämmenden Eingriff des Zwischenzahnrads 16 zur Drehmomentübertragung von der Antriebswelle 3 zur Abtriebswelle 14 zwischen den beiden Spindelkugellagern 13, 13' unmittelbar benachbart dem vorderen Spindelkugellager 13, ergeben sich besonders stabile Verhältnisse, insbesondere hinsichtlich des Schwingungsverhaltens der Antriebswelle 3.

Ein Vorsehen eines am vorderen Ende der Antriebswelle 3 angebrachten Planetengetriebes zur Untersetzung der Drehzahl der Antriebswelle 3 zu einer Abtriebswelle 14 kann somit entfallen. Somit wird im Vergleich zu bekannten Gasturbinen eine geringere Baulänge und auch ein geringeres Gesamtgewicht der Anordnung erlangt. Des Weiteren können zusätzliche Stützlager entfallen.

Darüber hinaus bleibt aufgrund der seitlich beabstandeten Anordnung der Abtriebswelle 14 von der Antriebswelle 3 der volle Ausgangsquerschnitt der Verdichterstufe 6 erhalten, und es kann auch problemlos ein Elektrostarter an dem Verdichterrad 4 angebracht werden.

## Patentansprüche

1. Gasturbine (1), insbesondere für Modellflugzeuge, Modellhubschrauber und andere kleine Antriebe, mit einer eine ringförmige Brennkammer (2) durchsetzenden, mittels zwei Hauptlagern (13, 13') drehbar gelagerten Antriebswelle (3), mit der ein Verdichterrad (4) und ein Turbinenrad (11) drehfest verbunden sind, und einer von der Antriebswelle (3) angetriebenen Abtriebswelle (14), wobei eine aus Stirnzahnrädern bestehende Vorrichtung zur Drehmomentübertragung von der Antriebswelle (2) auf die Abtriebswelle (14) zwischen den beiden Hauptlagern (13, 13') vorgesehen ist, **dadurch gekennzeichnet, dass** die Vorrichtung zur Drehmomentübertagung in einem Spalt zwischen einem vorderen Leitsystem (7) und der Brennkammer (2) angeordnet ist.

2. Gasturbine nach Anspruch 1, **dadurch gekennzeichnet, dass** die Vorrichtung zur Drehmomentübertagung benachbart eines der beiden Hauptlager (13, 13') vorgesehen ist.

3. Gasturbine nach Anspruch 2, **dadurch gekennzeichnet, dass** die Vorrichtung zur Drehmomentübertagung benachbart dem vorderen Hauptlager (13) vorgesehen ist.

4. Gasturbine nach einem der Ansprüche 1 bis 3, **dadurch gekennzeichnet, dass** als Vorrichtung zur Drehmomentübertragungein ein zweistufiges Zahnradgetriebe (15) vorgesehen ist.

5. Gasturbine nach einem der Ansprüche 1 bis 4, **dadurch gekennzeichnet, dass** die Antriebswelle (2) zumindest abschnittsweise eine eingefräste Verzahnung (18) aufweist.

6. Gasturbine nach Anspruch 5, **dadurch gekennzeichnet, dass** die Verzahnung (18) an dem dem vorderen Leitsystem (7) zugewandten Endabschnitt (17) der Antriebswelle (2) vorgesehen ist.

7. Gasturbine nach einem der Ansprüche 1 bis 6, **dadurch gekennzeichnet, dass** ein Zahnrad (16) des Zahnradgetriebes (15) über eine Ausnehmung (19) in einem die Antriebswelle (2) umgebenden mantelförmigen Wellentunnel (12) mit der Verzahnung (18) der Antriebswelle (2) in Verbindung steht.

8. Gasturbine nach einem der Ansprüche 1 bis 7, **dadurch gekennzeichnet, dass** eine Untersetzung der Drehzahl der Antriebswelle (2) zur Drehzahl der Abtriebswelle (14) von 6-10 : 1, vorzugsweise von 8 : 1 vorgesehen ist.

9. Gasturbine nach einem der Ansprüche 1 bis 8, **dadurch gekennzeichnet, dass** die Abtriebswelle (14) nach vorne über das Verdichterrad (4) hinausragt.

10. Gasturbine nach Anspruch 9, **dadurch gekennzeichnet, dass** ein Propellerrad mit der Abtriebswelle (14) drehfest verbunden ist.

11. Gasturbine nach Anspruch 9, **dadurch gekennzeichnet, dass** die Abtriebswelle (14) mit einer Fliehkraftkupplung mit einem Zahnrad oder einer Zahnriemenscheibe verbunden ist.

12. Gasturbine nach einem der Ansprüche 5 bis 11, **dadurch gekennzeichnet, dass** eine Schmierleitung (23) im Bereich der Verzahnung (18) der Antriebswelle (2) endet.

13. Gasturbine nach einem der Ansprüche 12, **dadurch gekennzeichnet, dass** zur Schmierung ein Kraftstoff/Öl-Gemisch vorgesehen ist.

14. Gasturbine nach einem der Ansprüche 1 bis 13, **dadurch gekennzeichnet, dass** die Antriebswelle (2) einen Außendurchmesser von 13 bis 15 mm aufweist.

## Claims

1. A gas turbine (1), in particular for model aircraft, model helicopters and other small propulsion units, comprising a drive shaft (3) rotatably mounted by means of two main bearings (13, 13') and extending through an annular combustion chamber (2) and to which a compressor impeller (4) and a turbine wheel (11) are non-rotationally connected, and a driven shaft (14) driven by said drive shaft (3), wherein a device comprised of front toothed wheels is provided for transmitting the torque from the drive shaft (3) to the driven shaft (14) between the two main bearings (13, 13'), **characterized in that** the device for torque transmission is provided in a gap between a forward guiding system (7) and the combustion chamber (2).

2. A gas turbine according to claim 1, **characterized in that** the device for torque transmission is provided adjacent one of the two main bearings (13, 13').

3. A gas turbine according to claim 2, **characterized in that** the device for torque transmission is provided adjacent the forward main bearing (13).

4. A gas turbine according to any one of claims 1 to 3, **characterized in that** a two-step toothed gearing (15) is provided as device for torque transmission.

5. A gas turbine according to any one of claims 1 to 4, **characterized in that** the drive shaft (3) at least in portions thereof comprises a milled-in toothing (18).

6. A gas turbine according to claim 5, **characterized in that** the toothing (18) is provided on that end portion (17) of the drive shaft (3) which faces the forward guiding system (7).

7. A gas turbine according to any one of claims 1 to 6, **characterized in that** a toothed wheel (16) of the toothed gearing (15) is in connection with the toothing (18) of the drive shaft (3) via a recess (19) in a jacket-shaped shaft tunnel (12) surrounding the drive shaft (3).

8. A gas turbine according to any one of claims 1 to 7, **characterized in that** a reduction of the rotational speed of the drive shaft (3) to the rotational speed of the driven shaft (14) of 6-10 : 1, preferably of 8 : 1, is provided.

9. A gas turbine according to any one of claims 1 to 8, **characterized in that** the driven shaft (14) forwardly projects beyond the compressor impeller (4).

10. A gas turbine according to claim 9, **characterized in that** a propeller wheel is non-rotationally connected to the driven shaft (14).

11. A gas turbine according to claim 9, **characterized in that** the driven shaft (14) is connected to a toothed wheel or to a toothed pulley by means of a centrifugal clutch.

12. A gas turbine according to any one of claims 5 to 11, **characterized in that** a lubricant duct (23) ends in the region of the toothing (18) of the drive shaft (3).

13. A gas turbine according to claim 12, **characterized in that** a fuel/oil mixture is provided for lubrication purposes.

14. A gas turbine according to any one of claims 1 to 13, **characterized in that** the drive shaft (3) has an external diameter of from 13 to 15 mm.

## Revendications

1. Turbine à gaz (1), en particulier pour modèles d'avions, modèles d'hélicoptères et autres petits dispositifs de propulsion, comportant un arbre moteur (3) traversant une chambre de combustion (2) de forme annulaire et monté tournant au moyen de deux paliers principaux (13, 13'), par lequel une roue de compresseur (4) et une roue de turbine (11) sont reliées solidairement en rotation, et comportant un arbre de sortie (14) entraîné par l'arbre moteur (3), un dispositif constitué de roues dentées droite étant prévu, pour la transmission du couple de rotation de l'arbre moteur (2) à l'arbre de sortie (14), entre les deux paliers principaux (13, 13'), **caractérisée en ce que** le dispositif de transmission du couple de rotation est disposé dans une fente entre un système de guidage (7) avant et la chambre de combustion (2).

2. Turbine à gaz selon la revendication 1, **caractérisée en ce que** le dispositif de transmission du couple de rotation est prévu au voisinage de l'un des deux paliers principaux (13, 13').

3. Turbine à gaz selon la revendication 2, **caractérisée en ce que** le dispositif de transmission du couple de rotation est prévu au voisinage du palier principal avant (13).

4. Turbine à gaz selon l'une des revendications 1 à 3, **caractérisée en ce qu'**il est prévu un engrenage (15) à deux étages comme dispositif de transmission du couple de rotation.

5. Turbine à gaz selon l'une des revendications 1 à 4, **caractérisée en ce que** l'arbre moteur (2) comporte au moins par endroits une denture (18) fraisée.

6. Turbine à gaz selon la revendication 5, **caractérisée en ce que** la denture (18) est prévue sur le tronçon terminal (17), tourné vers le système de guidage avant (7), de l'arbre moteur (2).

7. Turbine à gaz selon l'une des revendications 1 à 6, **caractérisée en ce qu'**une roue dentée (16) de l'engrenage (15) est en liaison, par un évidement (19) pratiqué dans un tunnel pour arbre (12) en forme d'enveloppe entourant l'arbre moteur (2), avec la denture (18) de l'arbre moteur (2).

8. Turbine à gaz selon l'une des revendications 1 à 7, **caractérisée en ce qu'**il est prévu une démultiplication de la vitesse de rotation de l'arbre moteur (2) par rapport à la vitesse de rotation de l'arbre de sortie (14), de 6-10:1, de préférence de 8:1.

9. Turbine à gaz selon l'une des revendications 1 à 8, **caractérisée en ce que** l'arbre de sortie (14) dépasse vers l'avant de la roue du compresseur (4).

10. Turbine à gaz selon la revendication 9, **caractérisée en ce qu'**une roue d'hélice est reliée solidairement en rotation à l'arbre de sortie (14).

11. Turbine à gaz selon la revendication 9, **caractérisée en ce que** l'arbre de sortie (14) est relié par un accouplement centrifuge à une roue dentée ou une poulie pour courroie crantée.

12. Turbine à gaz selon l'une des revendications 5 à 11, **caractérisée en ce qu'**une conduite de lubrification (23) se termine dans la zone de la denture (18) de l'arbre moteur (2).

13. Turbine à gaz selon la revendication 12, **caractérisée en ce que** pour la lubrification il est prévu un mélange de carburant et d'huile.

14. Turbine à gaz selon l'une des revendications 1 à 13, **caractérisée en ce que** l'arbre moteur (2) présente un diamètre extérieur de 13 à 15 mm.
